# EUROPEAN PATENT APPLICATION

(11) **EP 1 162 860 A2**
(43) Date of publication of application: **12.12.2001**
(21) Application number: 01440158.2
(22) Date of filing: 08.06.2001
(51) Int. Cl.: H04Q 11/00, H04L 12/56

(54) **Scalable WDM optical IP router architecture**

(30) Priority: 08.06.2000 US 210291 P
(71) Applicant: ALCATEL, 75008 Paris (FR)
(72) Inventor: Ge, An, Plano, Texas 75025 (US); Tamil, Lakshman S., Plano, Texas 75093 (US); Chiaroni, Dominique, 92160 Antony (FR); Jourdan, Amaury, 92310 Sèvres (FR)
(74) Representative: Wörz, Volker Alfred

(57) **Abstract**

A scalable Wave Division Multiplexing (WDM) optical IP switching method and system are disclosed for switching data packet payloads in the optical domain. The method comprises the steps of: receiving, at an optical switch, one or more optical signals comprising a plurality of optical data packets, wherein each data packet has a payload and header information and wherein each input fiber has at least one input wavelength; extracting the header information from each of the plurality of data packets; converting the header information for each of the plurality of data packets from an optical format to an electrical format; processing the header information for each of the plurality of data packets at a control unit to generate control signals to control data packet payload routing through the optical switch; routing the payload from each data packet through the optical switch to at least one desired switch output; converting the header information for each data packet back to an optical format; and recombining the payload and header information for each data packet for transmission on one or more output fibers from the desired switch output.

## Description

### TECHNICAL FIELD OF THE INVENTION

The present invention relates generally to optical network systems and methods and, more particularly, to a system and method for a scalable wavelength division multiplexing ("WDM") optical Internet Protocol ("IP") router architecture.

### BACKGROUND OF THE INVENTION

Data traffic on networks, particularly on the Internet, has increased dramatically over the past several years, and this trend will continue with the introduction of new services that require more bandwidth. The dramatic increase in Internet Protocol ("IP") traffic is leading to a realization that the equipment lines in corporate and institutional networks, and in the Internet itself, may not keep up with the demand for more bandwidth. The large volume of Internet traffic requires a network with high capacity switching routers capable of routing data packets with variable lengths.

Current electronic IP switching routers will become difficult, if not impossible, to scale with the increase in IP traffic. Optical data packet switching routers can overcome the difficulties in electronic routers. In particular, the emergence of dense wavelength division multiplexing ("DWDM") technology has helped to overcome the bandwidth problem encountered by current optical networks. A single DWDM optical fiber can carry as much as 10 terabits of data per second. However, because current switching technologies are capable of switching data at rates of only 1 to 10 gigabits per second, current optical networks use only a small fraction of the bandwidth available on a single optical fiber.

Different optical data packet switching architectures exist that provide all optical solutions for fast data packet switching. One approach is the use of a broadcast and select switch. Broadcast and select switches can provide a solution for data packet switching with native broadcast and multicast functions entirely in the optical domain. Broadcast and select switches can have a single wavelength for each input/output fiber. Semiconductor Optical Amplifiers ("SOAs") can be used as gates for selecting data packets to be routed. The selected data packets can be sent to different Fiber-Delay Line ("FDL") buffers. The select matrix at the output of the broadcast and select switch can then choose and forward data packets for transmission.

Using WDM-based input/output fibers, prior art switching architectures can take advantage of wavelength routing and fast SOA switch blocks to provide data packet switching. Each data packet on an individual wavelength fiber can be processed and possibly wavelength-converted before it enters a space switch matrix. A single SOA gate is used to handle each individual wavelength in these architectures to prevent cross talk inside the active components.

However, current broadcast and select switches cannot be directly migrated to a WDM input/output for each port. Other architectures suitable for WDM systems are available, but they do not include broadcast and multicast functions at the switch level. Additionally, prior art WDM systems use tunable wavelength converters, which generate noise that is difficult to filter out. This unfilterable noise limits the scalability of such systems. Some prior art architectures, such as Arrayed waveguide ("AWG") based architectures, use AWG's and Fiber Delay Line buffers for each wavelength channel, which can make for a physically very large switch.

Although approaches other than broadcast and select switches have been advocated for using optical technology in place of electronic switching systems, the limitations of optical component technology have largely limited optical switching to facility management applications. For example, another approach, called optical burst switch networking, attempts to make the best use of optical and electronic switching technologies. The electronics provide dynamic control of system resources by assigning individual user data bursts to channels of a DWDM fiber, while the optical technology is used to switch the user data channels entirely in the optical domain.

However, previous optical burst switch networks designed to directly handle end-to-end data user channels have been disappointing and have shown the limitations of current optical components. For example, one prior art optical burst switch network utilized ATM switches in the control network that made the design of the control network more complicated and less efficient. Other prior art optical burst switch networks are not entirely optical, but instead use electronic buffers in the optical routers. Electronic buffers cannot provide end-to-end transparent optical paths for data packet switching.

Current electronic switching systems require an optical-to-electrical signal conversion for every channel (wavelength) coming into the switch router. These systems extract and process header information to route the data packets, but to do so they must convert the entire data packet into electrical form and temporarily store the data packet payload while processing the header information. This is both costly and slow, in that it requires a separate memory buffer for every wavelength to store the data packet payload while reading the header information.

Furthermore, because the minimum IP data packet size is fixed, as data transmission speed increases - for example, from the most popular speed today (155 megabits per second) up to the current possible 2.5 gigabits or 10 gigabits per second - the amount of time that a switching router has to process each individual data packet decreases. Prior art methods that perform an optical-to-electrical conversion of the entire data packet become overly problematical as transmission speeds increase. The limiting factor is not the data transfer speed of the fiber optic lines, but instead the data processing speed of prior art switches and routers. Additionally, optical-to-electrical conversion is limiting in that individual data packets must be synchronized to recreate each data packet at the output of optical switch 10.

### SUMMARY OF THE INVENTION

Therefore a need exists for a scalable WDM optical IP router architecture that can switch IP data packet payloads in an all-optical manner without having to convert the entire data packet from an optical to an electric format. By eliminating the optical-to-electrical conversion of the entire data packet, the scalable WDM optical IP router architecture of the present invention can provide an end-to-end transparent optical path for data packets.

A further need exists for a scalable WDM optical IP router architecture with fast data packet switching capability.

A still further need exits for a scalable WDM optical IP router architecture that can be directly migrated to a WDM input/output for each switch port.

An even further need exists for a scalable WDM optical IP router architecture that can provide broadcast and multicast functions at the switch level, implemented in either the wavelength domain at the switch input or by a select matrix at the switch output.

A still further need exists for a scalable WDM optical IP router architecture that combines optical switches with optical wavelength converters to improve the flexibility and throughput of optical networks. Such an architecture can provide an optical IP data packet router structure for fast all-optical data packet switching.

An even further need exists for a scalable WDM optical IP router architecture that uses WDM at both the switch input and the switch output, and thus provides full wavelength domain flexibility for data packet switching among nodes of core data networks.

A still further need exists for a scalable WDM optical IP router architecture that can combine fast SOA gates and wavelength converters at the switch input to resolve conflicts in the wavelength domain. Such an architecture can provide for switching IP data packets in a completely optical manner.

An even further need exists for a scalable WDM optical IP router architecture with reduced component requirements and reduced physical size, as compared to previous such architectures.

Still further, a need exists for a scalable WDM optical IP router architecture that can be scaled to provide greater data capacity by having more wavelengths per fiber than currently existing methods and systems.

In accordance with the present invention, a scalable WDM optical IP router architecture and switching method are provided that substantially eliminate or reduce disadvantages and problems associated with previously developed systems and methods for switching optical data packets across a network.

More specifically, the present invention provides a scalable Wave Division Multiplexing (WDM) optical IP switching method and system, the method comprising the steps of: receiving, at an optical switch, one or more optical signals, having a plurality of optical data packets, along one or more input fibers, wherein each data packet has a payload and header information and wherein each input fiber is capable of transmitting data packets on at least one input wavelength; extracting the header information from each data packet; converting the header information for each data packet to an electrical format; processing the header information for each data packet at a control unit to generate control signals to control data packet payload routing through the optical switch; routing the payload from each data packet through the optical switch, in an all-optical manner, to at least one desired switch output; converting the header information for each data packet back to an optical format; and recombining the payload and header information for each data packet for transmission on one or more output fibers from the desired switch output.

Routing of data packets according to the teachings of this invention can further comprise the steps of: splitting each input signal at one of one or more input splitters into one or more identical signals; forwarding from each of the input splitters one of the identical signals to each of one or more space switch blocks; resolving potential wavelength conflicts among the data packets at the space switch blocks based on a desired output status; forwarding from each space switch block one or more wavelength resolved output signals, each to a different one of one or more input wavelength converters connected to a different one of one or more broadcast and select switches (BSSs); converting the wavelengths of the data packets carried on each of the wavelength resolved output signals to one of one or more internal wavelengths at one of the input wavelength converters, such that the data packets carried by each of the wavelength resolved output signals forwarded from the same switch block are converted to the same wavelength; filtering out ASE noise generated by the wavelength converters using one or more fixed wavelength filters; forwarding the filtered signals to their respective BSS; resolving any time domain conflicts among the data packets at said BSSs; forwarding one or more time resolved output signals from each BSS to an output wavelength converter, such that each of the time resolved output signals goes to its own output wavelength converter; converting to an output wavelength the wavelengths of the data packets carried on each time resolved output signal, such that the data packets carried by each of the time resolved output signals forwarded from the same BSS are converted to the same wavelength; and receiving at each of one or more output multiplexers one of the time resolved output signals from each of the BSSs for multiplexing together into one of one or more output WDM signals comprising those data packets selected for output along the desired switch output.

The present invention provides an important technical advantage of a scalable WDM optical IP router architecture that can switch IP data packet payloads in an all-optical manner.

The present invention provides another technical advantage of a scalable WDM optical IP router architecture with fast data packet switching capability.

A still further technical advantage of the scalable optical IP switching router architecture of the present invention is that it can be directly migrated to a WDM input/output for each port.

An even further technical advantage of the optical IP switching router architecture of the present invention is its ability to include broadcast and multicast functions at the switch level.

Yet another technical advantage of the scalable optical IP switching router architecture of the present invention is that it can combine optical switches with optical wavelength converters to improve the flexibility and throughput of optical networks.

Still another technical advantage of the scalable optical IP switching router architecture of the present invention is the ability to use WDM at both the switch input and the switch output to provide full wavelength domain flexibility for data packet switching among nodes of core data networks.

Even further, the scalable optical IP switching router architecture of the present invention provides the technical advantage of combining fast SOA gates and wavelength converters at the switch input to resolve conflicts in the wavelength domain.

Yet another technical advantage of the scalable optical IP switching router architecture of the present invention is its reduced component requirements.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
FIGURE 1 is a block diagram of one embodiment of the scalable WDM optical IP router architecture for data packet switching of the present invention;
FIGURE 2 is a close-up block diagram of optical space switch block 18 of FIGURE 1; and
FIGURE 3 is a close-up block diagram of broadcast and select switch 26 of FIGURE 1.

### DETAILED DESCRIPTION OF THE INVENTION

Preferred embodiments of the present invention are illustrated in the FIGUREs, like numerals being used to refer to like and corresponding parts of the various drawings.

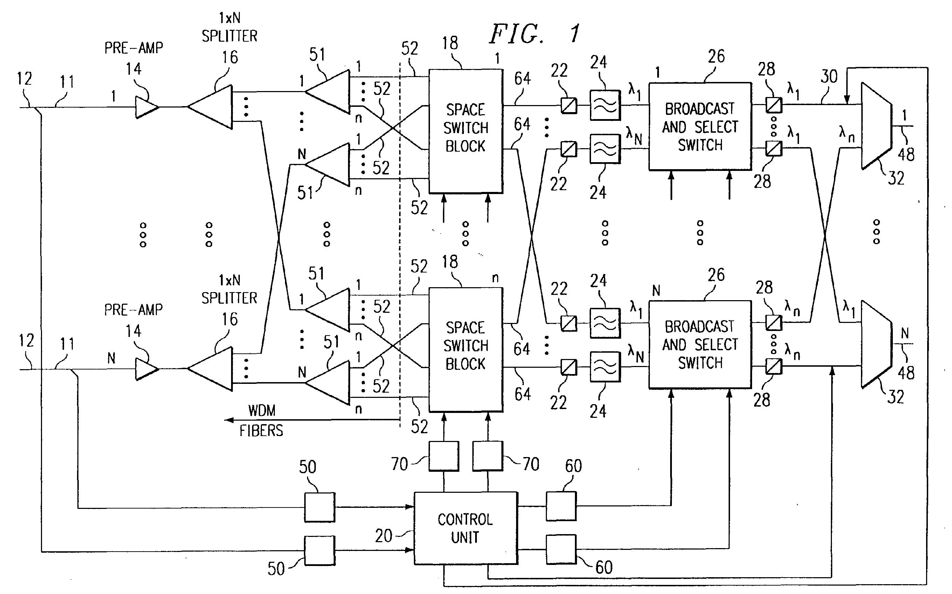

FIGURE 1 shows one embodiment of the scalable WDM optical IP router architecture for data packet switching of the present invention. Optical switch 10 can take as inputs from 1 to N input WDM fibers 12, where N is an arbitrary number whose value is determined by switch size and technology constraints, as discussed more fully below. Input WDM fibers 12 can carry optical data packets consisting of payload data bits and data packet header information. Header information can be extracted and processed electronically via control unit 20. The remainder of a data packet can pass through optical switch 10 in an entirely optical format, and output from optical switch 10 on one of N output WDM fibers 48.

Control unit 20 can direct the operation of the various components of optical switch 10 to ensure the IP data packets are routed to the correct output. Control unit 20 can perform this function by processing the data packet's header information to generate control signals. Control unit 20 can then continually update the control signal information for space switch blocks 18 and broadcast and select switches 26 based on incoming header information. Electrical-to-optical converters 70 are used to convert the generated control signals from an electrical to an optical format for controlling the operation of space switches 18 and broadcast and select switches 26. The number of electrical-to-optical converters 70 can be from 1 to N, the number of input fibers 12. Space switches 18 and broadcast and select switches 26 will be discussed more fully below.

Input WDM fibers 12 carry input WDM signals 11. Input WDM signals 11 can contain data packets assigned to and carried along different wavelengths. Input WDM signals 11 arrive at preamplifiers 14 where the signals are amplified and forwarded to input splitters 16. Optical switch 10 can have from 1 to N preamplifiers 14 and from 1 to N input splitters 16, one each corresponding to each of the 1 to N input WDM fibers 12. Input splitters 16 are 1xN splitters that split each of the incoming input WDM signals 11 into N identical signals and forward these duplicate signals to each of the N space switch blocks 18. Each of the N space switch blocks 18 thus receives as inputs each of the 1 to N input WDM signals 11.

The main function of space switch blocks 18 is to resolve potential wavelength conflicts among the incoming data packets. Each input WDM fiber 12 can carry up to n wavelengths that can be assigned to incoming data packets, where n is an arbitrary number determined by the capacity of currently available switching technology. These wavelengths carried along the different input WDM fibers 12 can possibly overlap between different input WDM fibers 12, resulting in a potential conflict if one or more data packets on different fibers are assigned the same wavelength. When these data packets are routed through an optical IP router, they can potentially conflict with one another.

Because there are up to N input WDM fibers 12, and each input WDM fiber 12 can have up to n wavelengths assigned to it, the total number of possible wavelengths is Nxn. Currently, each input WDM fiber 12 can have up to 32 wavelengths. Space switch blocks 18 can prevent conflicts that may exist when two or more data packets are destined for the same output. If each of two or more input WDM fibers 12 simultaneously carry data packets whose output destination and wavelength are the same, there exists a potential for a conflict to occur as the data packets are routed to their intended output WDM fiber 48, with the corresponding potential loss of data. To avoid these potential conflicts, space switch blocks 18, under the control of control unit 20, can direct each data packet on each of the 1 to N input WDM fibers 12 to a specific, and possibly different, broadcast and select switch 26.

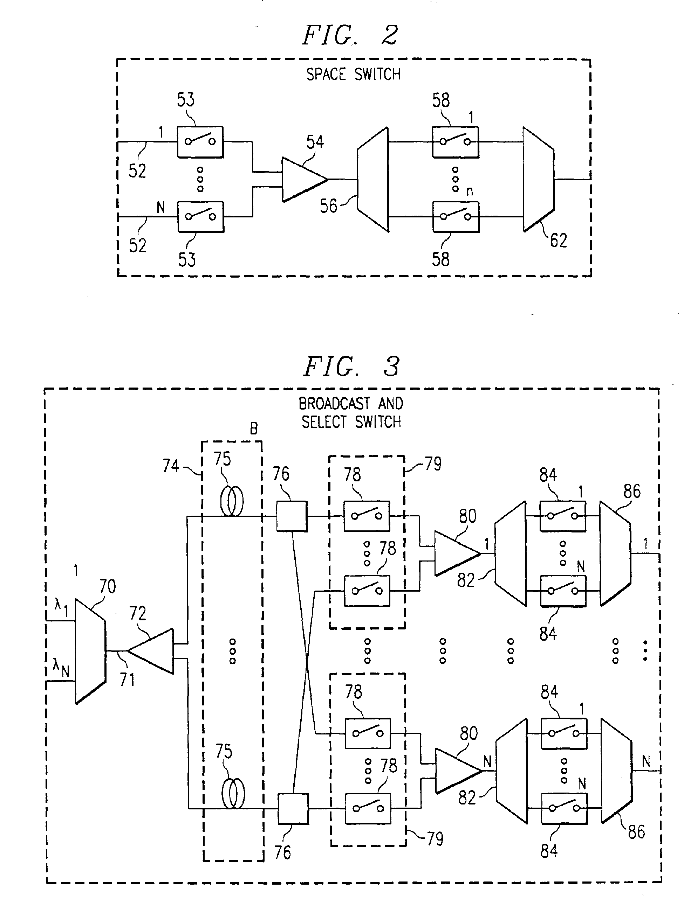

FIGURE 2 is a close-up block diagram of an optical space switch block 18 of FIGURE 1. As shown in FIGURE 2, each optical space switch block 18 contains from 1 to N space switch splitters 51. Space switch splitters 51 split each of the incoming WDM input signals 11 into up to n identical signals and route these signals, one each, to each of 1 to n space switches 19 along signal lines 52. Each of the 1 to n space switches 19 within each space switch block 18 thus receives as an input each of the 1 to N input WDM signals 11. Each space switch 19 within each space switch block 18 will process the 1 to N input WDM signals 11 and output a selected wavelength data packet. The wavelength selected for output from each of the space switches 19 can change as determined by control inputs from control unit 20.

Within each space switch 19, the 1 to N input WDM signals 11 are each received at a different signal Semiconductor Optical Amplifier (SOA) 53. Each signal SOA 53 acts as an on/off switch that can either pass a signal when "on" or can block a signal from passing when "off." Signal SOAs 53 can be controlled by an input signal from control unit 20. Each signal SOA 53 can have a driver to control its operation. For example, if the current through a signal SOA 53 is one value (e.g., 200 milliamps), then the signal SOA 53 can become transparent and pass an incoming signal. Alternatively, if the current value through a signal SOA 53 is a lesser value (e.g., 50 milliamps), the signal SOA 53 can become obscure and absorb the optical signal, preventing transmission. Signal SOAs 53 can provide the capability for fast data packet switching.

Signal SOAs 53 can thus be used to select within each space switch 19 one or more input WDM signals 11 to forward to a signal coupler 54. Each signal coupler 54 couples together the selected signals within each space switch 19 and forwards them to a space switch signal demultiplexer 56. Each space switch signal demultiplexer 56 separates the coupled signals forwarded from an input coupler 54 into their component wavelength data packets. Each space switch signal demultiplexer 56 forwards the separated data packets to a second bank of SOAs, space switch wavelength SOAs 58, that can select one or more wavelengths to forward to a space switch output multiplexer 62. Each space switch output multiplexer 62 can multiplex the selected one or more wavelengths for output from its respective space switch 19. Space switch wavelength SOAs 58 operate in the same manner as signal SOAs 53, as discussed above. The output data packets from each space switch 19 are forwarded to input wavelength converters 22 of FIGURE 1.

Each space switch 19 within each space switch block 18 performs the same function. Each can select a different wavelength data packet to forward, or one or more of the space switches 19 can select the same wavelength data packet to forward, to a different broadcast and select switch 26. In this way, optical switch 10 of the present invention can provide for a much higher level of utilization of each of the broadcast and select switches 26.

Space switch blocks 18 can, under the control of control unit 20, select and forward particular data packets on a given wavelength to a broadcast and select switch that at a given point in time is underutilized. For example, some broadcast and select switches 26 may be receiving a high level of data traffic, while other broadcast and select switches 26 may be receiving a very low level of data traffic. Control unit 20 can provide a control input to optical switch blocks 18 to control the routing of incoming data packets and maximize the efficiency and utilization of broadcast and select switches 26.

Although optical switch 10 is an optical switch architecture, a separate layer of electronics, in the form of control unit 20, can be used to control data packet routing in optical switch 10. Control unit 20 can provide control information to space switch blocks 18 based on extracted header information from each data packet carried on the N input WDM fibers 12. Control unit 20 can also provide control input to each of the broadcast and select switches 26. Control unit 20 provides these control inputs directly to the SOAs in each of space switches 19 and broadcast and select switches 26.

Header information is extracted from each data packet before the data packet arrives at preamplifiers 14 of FIGURE 1. The header information is forwarded to control unit 20 through input optical-to-electrical converters 50, which convert the header information from an optical to an electric format. Control unit 20 can determine from the extracted header information what wavelengths are being used within each input WDM fiber 12. Control unit 20 can route data packets based on their header information so that each of the data packets reaches its intended switch output without conflict or loss/corruption of data. If the possibility of conflict between data packets exists, control unit 20 can issue an appropriate control signal to properly route the data packets, as discussed above, to avoid the potential conflict.

Returning now to FIGURE 1, each optical switch block 18 can output from 1 to n data packet signals. The data packets output from an optical switch block 18 at a given time can be different data packets along each of the 1 to n outputs, or two or more data packets along two or more of the 1 to n outputs can be the same, or any combination of same and different data packets can occur within the capacity of the switch block 18. All of the outputs from the space switches 19 of a space switch block 18 will be assigned the same internal wavelength by input wavelength converters 22. For example, all of the outputs from the first space switch block 18, whether identical data packets or not, might be assigned to internal wavelength λ₁, and so on for the second, third, etc., optical switch blocks 18. The present invention can have from 1 to N internal wavelengths λ₁...λ_{N}.

In this way, optical space switch blocks 18 can provide a great deal of routing flexibility for the data packets carried along input WDM signals 11. An incoming data packet can be routed to a single broadcast and select switch 26, or can be sent to two or more broadcast and select switches 26. The broadcast and select switch to which a data packet is sent need not be fixed, and thus any of broadcast and select switches 26 can be used to carry any given data packet.

The 1 to n outputs from each of optical space switch blocks 18 are forwarded to individual input wavelength converters 22. Input wavelength converters 22 can convert the wavelength of the data packets they receive to a new, and potentially different, wavelength. Input wavelength converters 22 are fixed wavelength converters that convert incoming data packet wavelengths to the same new wavelength each time. The output wavelength of the input wavelength converters 22 can be different for each input wavelength converter 22, but the output wavelength for a given input wavelength converter 22 will always be the same assigned wavelength. Each broadcast and select switch (BSS) 26 has N input wavelength converters 22, one for each of the 1 to N internal wavelengths. Each BSS 26 can thus process all of the N internal wavelengths used by optical switch 10.

From input wavelength converter 22, each data packet with newly assigned internal wavelength is forwarded to a fixed wavelength filter 24. A fixed wavelength filter 24 can filter out ASE (broadband) noise generated by the fixed wavelength input wavelength converters 22. As opposed to tunable wavelength converters, fixed wavelength converters generate ASE noise in a narrow band. A narrow band pass filter, like fixed wavelength filters 24, can thus be used to filter and reduce the ASE noise generated by the fixed wavelength converters. By filtering out and reducing the ASE noise in the data packet signals, the architecture of optical switch 10 can be scaled to allow for a very large number of input/output ports. The noise generated by input wavelength converters 22 does not significantly limit the scaling capacity of optical switch 10 of this invention, as is the case in prior art optical switches employing tunable wavelength converters. The architecture of the present invention can thus be used in multi-terabit per second optical IP packet switches.

The data packets output from each of the fixed wavelength filters 24 are forwarded to a broadcast and select switch 26. Optical switch 10 can have up to n broadcast and select switches 26, one each for each of the possible wavelengths carried on input WDM fibers 12 and output WDM fibers 48. The total number of ports in optical switch 10 is thus N x n , the number of internal wavelengths (N) multiplied by the number of BSSs 26 (n).

Broadcast and select switches 26 can route data packets received as inputs to a desired output WDM fiber 48 and resolve any time (space) domain conflicts. An optical Fiber Delay Line (FDL) buffer bank 74 is used in each broadcast and select switch 26 for optical "memory" to minimize or prevent conflicts and reduce the data packet loss rate and enhance the statistical multiplex gain. Each of the N outputs of each broadcast and select switch 26 is connected to a different one of N output multiplexers 32 through a shuffle net connection. Each broadcast and select switch 26 can resolve conflicts among data packets in the time domain, and can provide for multicast/broadcast function in the time domain, as opposed to space switch blocks 18, which can provide multicast/broadcast function in the wavelength domain.

FIGURE 3 is a close-up block diagram of a broadcast and select switch 26 of FIGURE 1. Each BSS 26 takes as inputs at a broadcast and select input multiplexer 70 data packets assigned to each of the 1-N internal wavelengths by input wavelength converters 22. Each broadcast and select internal multiplexer 70 combines the 1-N internal wavelength data packets into a combined signal 71. Each combined signal 71 is forwarded to a broadcast and select input splitter 72, which can split the combined signal into 1 to B identical signals that are then forwarded to an FDL buffer bank 74. Any of the N internal wavelengths coming into a broadcast and select switch 26 can potentially carry the information that will eventually be output along any one of (or all) output WDM fibers 48. Logically, the fiber delay line buffers 75 of each FDL buffer bank 74 are each an output queue for output WDM fibers 48.

Control unit 20 of FIGURE 1 can provide a control input to each BSS 26 in the same manner as previously described. In this way, different broadcast and select switches 26 can be controlled in parallel to route data packets to particular output WDM fibers 48 based on their destination address. Since each input port for each BSS 26 carries only a single wavelength, it is thus possible to avoid the use of tunable wavelength converters in favor of fixed input wavelength converters 22.

Each FDL buffer bank 74 receives as inputs the 1-B identical split signals from its respective broadcast and select input splitter 72. Each FDL buffer bank 74 can have up to B FDL buffers 75. The number of FDL buffers 75 in each FDL buffer bank 74 can be scaled to any number, but is limited by cost of components. This is because as the number of FDL buffers 75 increases, the number of broadcast and select signal SOAs 78 in each BSS 26 also increases. FDL buffers 75 within each FDL buffer bank 74 can each provide an increasing level of delay, with the first delay level being a zero delay. Each subsequent FDL buffer 75 can insert an additional unit level of delay, where a unit level of delay can be the average data packet length.

Once each of the B combined signals 71 has been delayed by the necessary amount in an FDL buffer 75, the now delayed signals are forwarded to delay splitters 76. Each of delay splitters 76 split their respective delayed combined signal 71 into N identical signals and forward each of these signals to a separate broadcast and select signal SOA 78, such that the B differently delayed signals output from a FDL buffer bank 74 are each forwarded to a broadcast and select signal SOA 78 within an SOA bank 79 associated with each of 1 to N broadcast and select signal couplers 80. There is thus one broadcast and select signal SOA 78 for each of the N copies of each of the B delayed signals.

Broadcast and select signal SOAs 78 operate in the same manner as previously described for signal SOAs 53 and space switch wavelength SOAs 58. Based on a control input from control unit 20, broadcast and select signal SOAs 78 can selectively block or transmit a signal forwarded from an FDL buffer 75. The signals that are not blocked by a broadcast and select signal SOA 78 are forwarded to their respective broadcast and select signal coupler 80. There is one broadcast and select signal coupler 80 in each BSS 26 for each of the N output WDM fibers 48.

The signals selected by the broadcast and select signal SOAs 78 in each SOA bank 79 and forwarded to the respective broadcast and select signal coupler 80 are then forwarded to a broadcast and select signal demultiplexer 82 associated with that broadcast and select signal coupler 80. A broadcast and select signal demultiplexer 82 separates the selected delayed signal(s) from its respective broadcast and select signal coupler 80, into their component 1 to N assigned internal wavelengths. Each of the assigned wavelength data packet signals output from each of the 1 to N signal demultiplexers 82 can be forwarded to a broadcast and select wavelength SOA 84. There is a broadcast and select wavelength SOA for each of the 1 to N wavelengths output from each of the N broadcast and select signal demultiplexers 82 in each BSS 26. Each broadcast and select wavelength SOA 84 performs the same function in the same manner as previously discussed for space switch wavelength SOA 58.

Each broadcast and select wavelength SOA 84 within each BSS 26 operates to select and forward a single wavelength data packet to a broadcast and select output multiplexer 86. Each broadcast and select multiplexer 86 combines the selected ones of the 1 to N internal wavelength data packets forwarded from its respective broadcast and select signal demultiplexer 82 into a combined signal forwarded to an output wavelength converter 28. The data packets forwarded from the broadcast and select output multiplexers 86 of each BSS can be distinct or can be duplicates of one or more of the input converted wavelength data packets. In this manner, the n broadcast and select switches 26 can each output up to N data packet signals having any one of the n different wavelengths, and which, together with one or more of the output signals from one or more of the other BSSs 26, can comprise, in whatever combination, up to N complete output signals along the output WDM fibers 48.

Returning now to FIGURE 1, the selected wavelength data packets output from each broadcast and select output multiplexer 86 are forwarded to and received by an output wavelength converter 28. Optical switch 10 can have up to Nxn output wavelength converters 28, one each for each of the N signals that can be outputted by each of the n broadcast and select switches 26. Output wavelength converters 28 operate in the same manner as input wavelength converters 22 to convert whatever wavelength data packet they receive to a fixed output wavelength. Each output wavelength converter 28 therefore always converts its input wavelength to the same output wavelength, regardless of the input wavelength received.

Each of the 1 to N output wavelength converters 28 associated with each of the broadcast and select switches 26 forward their wavelength converted data packets to one of the 1 to N output multiplexers 32. Each output multiplexer 32 combines the data packets it receives as inputs into a single output signal that it then forwards as an output along its respective output WDM fiber 48. Broadcast and select switches 26 can thus select which, if any, input wavelengths they will forward as output wavelengths to each of the output WDM fibers 48. Using control inputs from control unit 20, broadcast and select switches 26 can therefore be used to broadcast a given signal to a selected output WDM fiber 48, to all output WDM fibers 48, or to some in between number of output WDM fibers 48. The outputs of each broadcast and select switch 26 are thus multiplexed together through a shufflenet connection and sent to their intended output WDM fiber 48.

Unlike prior art electronic switching routers, the present invention does not require a dedicated delay buffer for every data packet along every input fiber coming into optical switch 10, and can thus avoid the additional cost and reduced speed of prior art such systems. Instead, in the architecture of the present invention, the total number of internal wavelengths only depends on the number of input/output WDM fibers 12 or 48. Each FDL buffer bank 74 can handle a signal carrying from 1 to N (the number of input WDM fibers 12) internal wavelengths. Because of the limitations of current buffer technology and the limitations of current SOA technology which allow only a single wavelength to be passed by each SOA, the architecture of the present invention currently requires one broadcast and select switch 26 and a corresponding FDL buffer bank 74, per input wavelength.

If SOA and FDL buffer technology develop to the point that an SOA switch can handle, for example, two wavelengths at a time, the architecture of the present invention permits scaling up or down the number of components. If, for example, each SOA can block or transmit two wavelengths instead of the current one wavelength, then space switch blocks 18 could forward along each output two wavelengths instead of the current one, and the number of broadcast and select switches 26 could be reduced by half. This scaling could be accomplished for any increased number of wavelength capacity per SOA and FDL buffer bank 74.

The optical IP switching router architecture of the present invention avoids the problems of optical-to-electrical data packet conversion of prior art systems by tapping a single channel (wavelength) on each input WDM fiber 12. This channel can contain all of the control information for the input WDM fiber 12. Additionally, the entire process, except for the header information extraction (control information extraction), is entirely optical. The header information, furthermore, is a much smaller amount of data compared to the data packet as a whole. The present invention can therefore allow multiple data packets to be processed together in an all optical format. This can provide the capability for much faster speeds than are possible with current switching technology. The present invention, for example, can process data throughputs of up to 40 gigabits per second or more. The scaleable WDM optical IP router architecture of the present invention is also transparent, meaning that optical switch 10 can operate independently of data transmission speed.

Returning now to FIGURE 1, extracted header information can be reassembled with the remainder of the data packet at the output of optical switch 10. Electrical-to-optical converters 60, at the output of control unit 20, can convert the header information back to an optical format to be reassembled with its associated data packet. The present invention thus can reduce the number of optical-to-electrical conversions (and vice versa) from that of the prior art (one conversion for each wavelength) to just a single conversion for each input WDM fiber 12 of optical switch 10.

Each broadcast and select switch 26 provides as an output one or more data packets selected by that broadcast and select switch 26. These data packets are converted by the output wavelength converters 28 associated with a BSS 26 to a single wavelength assigned to that broadcast and select switch 26. However, although all of the data packets coming out of a given broadcast and select switch 26's broadcast and select output demultiplexers 86, each assigned the same wavelength, they are routed to different output WDM fibers 48. Furthermore, the data packets, although having the same wavelength, can contain different payloads.

The architecture of the present invention provides an important advantage by reducing the number of internal wavelengths needed to a number equal to the number of input WDM fibers 12. Because there is an upper limit on the number of wavelengths that each input WDM fiber 12 can carry and that can pass through each SOA, by reducing the number of internal wavelengths used, the total number of wavelengths that can be carried through optical switch 10 is increased. The number of input WDM fibers 12 can therefore likewise be increased.

This is accomplished by using a number of broadcast and select switches 26 equal to the maximum number of wavelengths that a single input WDM fiber 12 can carry. Broadcast and select switches 26 allow the scaling of the architecture of the present invention to handle a large number of wavelengths. As opposed to prior art methods that required nxN total internal wavelengths, the requirement of the present invention of only N internal wavelengths allows scaling to a much greater number of wavelengths, and hence to a greater number of input WDM fibers 12.

A broadcast and select switch 26 and its corresponding FDL buffer bank 74 is used for each wavelength carried by an input WDM fiber 12. Thus, if the number of wavelengths that an input WDM fiber 12 can carry increases, the architecture of the present invention allows scaling up to meet this new capacity by simply adding an additional broadcast and select switch 26 for each additional allowed wavelength. This is similar to the idea discussed above that if the capacity of buffers and SOAs increases, the number of broadcast and select switches 26 can be decreased.

The combination in the architecture of the present invention of space switch blocks 18 with broadcast and select switches 26 provides a mechanism by which conflicts between data packets can be avoided and fiber capacity can be increased. Space switch blocks 18 can be used to increase the capacity and throughput of broadcast and select switches 26 by optimizing, using a control input from control unit 20, the routing of data packets to those broadcast and select switches 26 that at a given time are being underutilized.

In broadcast and select switches 26, the first wavelength conversion that occurs at input wavelength converter 22 is used to prevent conflicts between data packets at FDL buffer banks 74. This is because data packets coming from different input WDM fibers 12 may have the same initial wavelength and, since they are being combined to be input into FDL buffer banks 74, they can conflict. To avoid such conflicts, input wavelength converters 22 convert the wavelengths of the data packets being combined to be processed by a single FDL buffer bank 74.

The FDL buffers 75 within each FDL buffer bank 74 are used to prevent conflict at the output of broadcast and select switches 26, and hence at the output of optical switch 10. By inserting an appropriate amount of delay into the signals received within a single broadcast and select switch 26, FDL buffers 75 can be used to prevent conflicts in time at the output of optical switch 10. Space switch blocks 18 are thus used to route incoming data packets to appropriate broadcast and select switches 26 to maximize the utilization of broadcast and select switches 26, and broadcast and select switches 26 are used to buffer and route the wavelength converted data packets to their designated outputs.

Broadcast and select switches 26 can provide broadcast and multicast functions at the switch level in a more efficient manner, and with less possibility of data corruption and/or loss, than prior art systems. As previously discussed, the architecture of the present invention can be scaled down if it becomes possible to carry two wavelengths per output from each space switch 19. In such a case, savings in components can be accomplished because the number of signals output from space switch blocks 18 is less, and hence the number of broadcast and select switches 26 required would be less. The outputs from space switch blocks 18 would be reduced by a factor equal to the number of wavelengths that would be processed by each of the space switches 19.

The architecture of the present invention permits scaling to a capacity of up to 10 terabits per second. Current existing state of the art routers only have a capacity of up to 100 gigabits per second. The architecture of the present invention thus permits a data throughput speed up to 100 times faster than currently existing technologies. For example, if the transmission speed of the data coming through an optical switch 10 of the present invention is 10 gigabits per second, and each fiber can carry 32 wavelengths, the capacity of the architecture of the present invention can be in the range of 10 terabits per second.

Although the present invention has been described in detail herein with reference to the illustrative embodiments, it should be understood that the description is by way of example only and is not to be construed in a limiting sense. It is to be further understood, therefore, that numerous changes in the details of the embodiments of this invention and additional embodiments of this invention will be apparent to, and may be made by, persons of ordinary skill in the art having reference to this description. It is contemplated that all such changes in additional embodiments are within the spirit and true scope of this invention as claimed below.

## Claims

1. A scalable Wave Division Multiplexing (WDM) optical IP switching method, comprising the steps of:
receiving one or more optical signals, comprising a plurality of optical data packets, at an optical switch along one or more input fibers, wherein each data packet has a payload and header information and wherein each input fiber is capable of transmitting data packets on at least one input wavelength;
extracting the header information from each data packet;
converting the header information for each data packet to an electrical format;
processing the header information for each data packet at a control unit to generate control signals to control data packet payload routing through the optical switch;
routing the payload from each data packet through the optical switch in an all-optical manner to at least one desired switch output;
converting the header information for each data packet back to an optical format; and
recombining the payload and header information for each data packet for transmission out of said at least one desired switch output along one or more output fibers.

2. The method of Claim 1, wherein said routing step further comprises:
splitting each input signal at one of one or more input splitters into one or more identical signals;
forwarding from each of said input splitters one of the identical signals to each of one or more space switch blocks;
resolving potential wavelength conflicts among the plurality of data packets at said space switch blocks based on a desired output status;
forwarding from each of said switch blocks one or more wavelength resolved output signals, each to a different one of one or more input wavelength converters communicatively connected to a different one of one or more broadcast and select switches (BSSs), such that each BSS can receive as an input one of the wavelength resolved output signals;
converting to an internal wavelength the wavelengths of said plurality of data packets carried by each of the wavelength resolved output signals, at said input wavelength converters, wherein the data packets carried by each of the wavelength resolved output signals forwarded from the same switch block are converted to the same wavelength;
filtering out ASE noise generated by the wavelength converters using one or more fixed wavelength filters;
forwarding the filtered signals to their respective one of the BSSs;
resolving any time domain conflicts among the plurality of data packets at said BSSs;
forwarding one or more time resolved output signals from each of said BSSs to an output wavelength converter for each of said time resolved output signals;
converting to an output wavelength the wavelengths of said plurality of data packets at the output of said BSSs at said output wavelength converters, wherein the data packets carried by each of the time resolved output signals forwarded from the same BSS are converted to the same wavelength; and
receiving at each of one or more output multiplexers one of the time resolved output signals from each of said BSSs for multiplexing together into one of one or more output WDM signals comprising those data packets selected for output along said desired switch output.

3. The method of Claim 2, wherein the number of signals output from said input splitters is equal to the number of said input fibers.

4. The method of Claim 2, wherein there is one space switch block per input fiber.

5. The method of Claim 2, wherein each of said space switch blocks further comprise:
one or more space switch splitters for further splitting each of the one or more signals received at each switch block into a second set of one or more identical signals; and
one or more space switches for receiving one signal each from each of said second set of identical signals.

6. The method of Claim 5, wherein said resolving wavelength conflicts step further comprises selecting at each space switch within each space switch block one or more data packets from said plurality of data packets for transmission, wherein said selection is performed using a first set of SOAs to select one or more signals from each of said second set of identical signals, a coupler to couple together the selected signals, a demultiplexer to separate out the selected signals' data packets by wavelength, a second set of SOAs to select one or more data packets for transmission, and a multiplexer to forward the selected data packets as one of said one or more wavelength resolved output signals.

7. The method of Claim 6, wherein said selecting step comprises selecting no data packets.

8. The method of Claim 6, wherein selection by said SOAs is controlled by said control signals from said control unit.

9. The method of Claim 8, wherein said control signals are based on said header information.

10. The method of Claim 2, wherein said resolving step further comprises routing one or more data packets from said plurality of data packets to a single BSS, to a plurality of BSSs, or to none of the one or more BSSs.

11. The method of Claim 2, wherein one or more of said wavelength resolved output signals comprises no data packets.

12. The method of Claim 2, wherein one or more of said time resolved output signals comprises no data packets.

13. The method of Claim 2, wherein two or more of said wavelength resolved output signals are identical.

14. The method of Claim 2, wherein two or more of said time resolved output signals are identical.

15. The method of Claim 2, wherein said input and output wavelength converters are fixed wavelength converters.

16. The method of Claim 2, wherein there is one fixed wavelength filter associated with each input wavelength converter.

17. The method of Claim 2, wherein said resolving time domain conflicts step further comprises selecting at each BSS one or more data packets from said plurality of data packets for transmission, wherein said selection is performed using a BSS input multiplexer to multiplex together said filtered signals received at each BSS, a BSS input splitter to split the multiplexed signal into one or more identical signals, an FDL buffer bank to delay one or more of said multiplexed identical signals, one or more splitters to forward duplicates of each delayed signal to a first set of SOAs to select one or more of said delayed signals, one or more couplers to couple together the selected signals, one or more demultiplexers to separate out the selected signals' data packets by wavelength, a second set of SOAs to select one or more data packets for transmission, and one or more multiplexers to forward the selected data packets as one of said one or more time resolved output signals.

18. The method of Claim 17, wherein said first set of SOAs, said one or more couplers, said one or more demultiplexers, said second set of SOAs and said one or more demultiplexers are arranged such that each BSS has one or more channels comprising a first set of one or more SOAs, a coupler, a demultiplexer, a second set of one or more SOAs, and a multiplexer.

19. The method of Claim 17, wherein said FDL buffer bank comprises one or more FDL buffers.

20. The method of Claim 19, wherein one of said FDL buffers provides zero delay.

21. The method of Claim 19, wherein each of said FDL buffers provides a delay of one or more unit increments.

22. The method of Claim 21, wherein said unit increments are equal to the average size of said plurality of data packet payloads.

23. The method of Claim 17, wherein there is one BSS and a corresponding FDL buffer bank for each wavelength carried by said input fibers.

24. The method of Claim 2, wherein the number of said BSSs is dependent on a relationship with the maximum number of wavelengths carried by an input fiber.

25. The method of Claim 24, wherein said relationship is one to one.

26. The method of Claim 24, wherein said relationship is one to two.

27. The method of Claim 2, wherein the number of said space switch blocks equals the number of internal wavelengths.

28. The method of Claim 27, wherein said number of internal wavelengths equals the number of input fibers.

29. The method of Claim 2, wherein said optical switch is scalable up or down to take advantage of improvements in the wavelength capacity of said FDL buffer banks.

30. The method of Claim 2, wherein said space switch blocks provide for broadcast and multicast capability at the switch level.

31. The method of Claim 2, wherein said BSSs provide for broadcast and multicast capability at the switch level.

32. The method of Claim 2, wherein said desired output status is an intended output fiber for each data packet.

33. The method of Claim 1, wherein the maximum number of said input wavelengths is thirty-two.

34. The method of Claim 1, further comprising the step of amplifying each input signal.

35. The method of Claim 1, wherein said control unit controls data packet payload routing by directing the operation of one or more space switch blocks and one or more broadcast and select switches with said control signals.

36. The method of Claim 35, wherein said control unit updates said control signals based on header information from said plurality of data packets.

37. The method of Claim 1, wherein said optical switch is scalable up or down to take advantage of improvements in the wavelength capacity of said input fibers.

38. The method of Claim 1, wherein said optical switch is used in a multi-terabit optical network.

39. The method of Claim 1, wherein said first converting step further comprises converting the header information from each data packet using a plurality of optical-to-electrical converters.

40. The method of Claim 1, wherein said control unit further comprises software instructions to control functionality of said control unit.

41. The method of Claim 1, wherein said processing step further comprises converting said generated control signals from an electrical to an optical format at one or more optical-to-electrical converters for controlling said data packet routing.

42. The method of Claim 1, wherein said second converting step further comprises converting the extracted header information from an electric format to an optical format using a plurality of electrical-to-optical converters.

43. The method of Claim 1, wherein one or more of said plurality of data packets are received at said optical switch along a common one of said input fibers and transmitted from said optical switch along a plurality of different output fibers.

44. The method of Claim 1, wherein said optical switch is independent of the rate of transmission of said plurality of data packets.

45. A scalable Wave Division Multiplexing (WDM) optical IP switch, comprising:
one or more input fibers for receiving one or more optical signals, wherein each data signal comprises a plurality of data packets, and wherein each input fiber is capable of transmitting data packets on at least one input wavelength;
a plurality of optical-to-electrical converters for converting header information from each data packet into electrical form;
a control unit for processing said electrical form header information to generate control signals to control data packet payload routing through said optical switch;
one or more input splitters for splitting each of said optical signals into one or more identical signals;
one or more space switch blocks for resolving potential wavelength conflicts among the plurality of data packets based on a desired output status;
one or more input wavelength converters for converting the wavelengths of each data packet output from said space switch blocks to one of one or more internal wavelengths;
one or more fixed wavelength filters for filtering out ASE noise generated by said input wavelength converters;
one or more broadcast and select switches (BSSs) for resolving any time domain conflicts among the plurality of data packets;
one or more output wavelength converters for converting the wavelengths of said plurality of data packets at the output of said BSSs to one of one or more output wavelengths;
a plurality of output electrical-to-optical converters for converting said electric form header information for each data packet back to an optical format;
one or more control electrical-to-optical converters for converting said generated control signals into an optical format to control said data packet routing; and
one or more output multiplexers for multiplexing together into one of one or more output WDM signals the header information and payload of those data packets from said plurality of data packets selected for output along said desired switch output.

46. The system of Claim 45, wherein the number of signals output from said input splitters is equal to the number of said one or more input fibers.

47. The system of Claim 45, wherein there is one space switch block per input fiber.

48. The system of Claim 45, wherein each of said space switch blocks further comprise:
one or more space switch splitters for further splitting each of the one or more signals received at each switch block into a second set of one or more identical signals; and
one or more space switches for receiving one signal each from each of said second set of identical signals.

49. The system of Claim 48, wherein each of said space switches further comprise:
a first set of Semiconductor Optical Amplifiers (SOAs) to select one or more signals from each of said second set of identical signals;
a coupler to couple together said selected signals;
a demultiplexer to separate out the selected signals' data packets by wavelength;
a second set of SOAs to select one or more data packets for transmission; and
a multiplexer to forward the selected data packets as one of one or more wavelength resolved output signals.

50. The system of Claim 49, wherein selection by said first and second set of SOAs is controlled by said control signals from said control unit.

51. The system of Claim 49, wherein said control signals are based on said header information.

52. The system of Claim 45, wherein said input and output wavelength converters are fixed wavelength converters.

53. The system of Claim 45, wherein there is one fixed wavelength filter associated with each input wavelength converter.

54. The system of Claim 45, wherein each of said BSSs further comprises:
a BSS input multiplexer to multiplex together said filtered signals received at each BSS;
a BSS input splitter to split the multiplexed signal into one or more identical signals;
an FDL buffer bank to delay one or more of said multiplexed identical signals;
one or more splitters to forward duplicates of each delayed signal to a first set of SOAs to select one or more of said delayed signals;
one or more couplers to couple together the selected signals;
one or more demultiplexers to separate out the selected signals' data packets by wavelength;
a second set of SOAs to select one or more data packets for transmission; and
one or more multiplexers to forward the selected data packets as one of one or more time resolved output signals.

55. The system of Claim 54, wherein said first set of SOAs, said one or more couplers, said one or more demultiplexers, said second set of SOAs and said one or more demultiplexers are arranged such that each BSS has one or more channels comprising a first set of one or more SOAs, a coupler, a demultiplexer, a second set of one or more SOAs, and a multiplexer.

56. The system of Claim 54, wherein said FDL buffer bank comprises one or more FDL buffers.

57. The system of Claim 56, wherein one of said FDL buffers provides zero delay.

58. The system of Claim 57, wherein each of said FDL buffers provides a delay of one or more unit increments.

59. The system of Claim 58, wherein said unit increments are equal to the average size of said plurality of data packet payloads.

60. The system of Claim 54, wherein there is one BSS and a corresponding FDL buffer bank for each wavelength carried by said input fibers.

61. The system of Claim 45, wherein the number of said BSSs is dependent on a relationship with the maximum number of wavelengths carried by an input fiber.

62. The system of Claim 61, wherein said relationship is one to one.

63. The system of Claim 61, wherein said relationship is one to two.

64. The system of Claim 45, wherein the number of said space switch blocks equals the number of internal wavelengths.

65. The system of Claim 64, wherein said number of internal wavelengths equals the number of input fibers.

66. The system of Claim 45, wherein said optical switch is scalable up or down to take advantage of improvements in the wavelength capacity of said FDL buffer banks.

67. The system of Claim 45, wherein said space switch blocks provide for broadcast and multicast capability at the switch level.

68. The system of Claim 45, wherein said BSSs provide for broadcast and multicast capability at the switch level.

69. The system of Claim 45, wherein the maximum number of said input wavelengths is thirty-two.

70. The system of Claim 45, wherein said desired output status is an intended output fiber for each data packet.

71. The system of Claim 45, further comprising one or more pre-amplifiers for amplifying each optical signal at the switch input.

72. The system of Claim 45, wherein said control unit controls data packet payload routing by directing the operation of said space switch blocks and said broadcast and select switches with said control signals.

73. The system of Claim 72, wherein said control unit updates said control signals based on header information from said plurality of data packets.

74. The system of Claim 45, wherein said optical switch is scalable up or down to take advantage of improvements in the wavelength capacity of said input fibers.

75. The system of Claim 45, wherein said optical switch is used in a multi-terabit optical network.

76. The system of Claim 45, wherein said control unit further comprises software instructions to control functionality of said control unit.

77. The system of Claim 45, wherein said optical switch is independent of the rate of transmission of said plurality of data packets.
